# EUROPÄISCHE PATENTSCHRIFT

(11) **EP 0 520 586 B1**
(45) Veröffentlichungstag und Bekanntmachung des Hinweises auf die Patenterteilung: **11.09.1996**
(21) Anmeldenummer: 92201902.1
(22) Anmeldetag: 25.06.1992
(51) Int. Cl.: B01F 17/52, C08G 18/34, C08G 18/38, C08G 18/42

(54) **Dispergiermittel, ihre Verwendung und damit beschichtete Feststoffe**
Dispersants, use thereof, and solids coated therewith
Agents dispersants, leur utilisation et solides enrobés avec ceux-ci

(30) Priorität: 26.06.1991 EP 91201650
(43) Veröffentlichungstag der Anmeldung: 30.12.1992
(73) Patentinhaber: EFKA-CHEMICALS B.V., NL-2182 GZ Hillegom (NL)
(72) Erfinder: Quednau, Peter Herman, 2182 ZH Hillegom (NL)
(74) Vertreter: Smulders, Theodorus A.H.J., Ir.

(56) Entgegenhaltungen:
- EP-A- 0 018 099
- EP-A- 0 154 678
- EP-A- 0 270 126
- EP-A- 0 311 157
- EP-A- 0 318 999
- EP-A- 0 335 197
- EP-A- 0 438 836
- WO-A-88/10148
- US-A- 4 868 277
- CHEMICAL ABSTRACTS, Band 74, Nr. 4, 25. Januar 1971, Seite 36, Spalte 2, Zusammenfassung Nr. 13947s, Columbus, Ohio, US; R.L. ZAPP et al.: "Isocyanate reactions with difunctional polyisobutylenes", & RUBBER CHEM. TECHNOL. 1970, 43(5), 1154-87

## Beschreibung

Die vorliegende Erfindung betrifft Dispergiermittel oder deren Salze, auf der Basis einer mindestens eine ringstickstoffhaltige basische Gruppe enthaltenden Verbindung, sowie die Herstellung solcher Verbindungen.

Die Erfindung betrifft weiterhin die Verwendung der Dispergiermittel und in flüssige Systeme einzuarbeitende pulver- oder faserförmige Feststoffe, die mit solchen Dispergiermitteln beschichtet sind.

Um Feststoffe in flüssige Medien einzubringen, sind hohe mechanische Kräfte notwendig. Dies hängt in hohem Mass von der Benetzbarkeit des Feststoffs durch das umgebende Medium sowie von der Affinität zu diesem Medium ab. Um diese Dispergierkräfte zu reduzieren, ist es üblich, Dispergiermittel anzuwenden, welche die Einarbeitung erleichtern. Hierbei handelt es sich meistens um oberflächenaktive Stoffe, auch Tenside genannt, von anionen- oder kationenaktiver sowie nicht-ionogener Struktur. Diese Stoffe werden in relativ geringen Zusatzmengen, entweder auf dem Feststoff direkt aufgebracht oder dem Dispergiermedium zugesetzt. Durch ein solches Tensid wird der Dispergieraufwand wesentlich reduziert.

Bekannt ist weiterhin, dass diese Feststoffe nach dem Dispergierprozess wieder zum Reagglomerieren neigen, was den zuvor aufgewendeten Dispergieraufwand zunichte macht und zu gravierenden Problemen führt. Dieses Phänomen erklärt man sich durch London/van der Waal's Kräfte, durch welche sich die Feststoffe gegenseitig anziehen. Um diese Anziehungskräfte zu überlagern, müssen Adsorptionsschichten auf die Feststoffe aufgebracht werden. Dies geschieht durch die Verwendung solcher Tenside.

Während und nach der Dispergierung tritt jedoch eine Wechselwirkung des umgebenden Mediums mit dem Feststoffpartikel ein, und es erfolgt eine Desorption des Tensides unter Austausch gegen das, in höherer Konzentration vorliegende, umgebende Medium. Dieses umgebende Medium ist jedoch in den meisten Fällen nicht in der Lage, solche stabilen Adsorptionsschichten aufzubauen, und das gesamte System bricht zusammen. Dies macht sich bemerkbar durch Viskositätsanstieg in flüssigen Systemen, Glanzverluste und Farbtonverschiebungen in Lacken und Beschichtungen, ungenügende Farbkraftentwicklung in pigmentierten Kunststoffen, sowie Verringerung der mechanischen Festigkeit in verstärkten Kunststoffen.

In der europäischen Patentanmeldung EP-A-154.678 ist ein Dispergiermittel beschrieben, umfassend das Reaktionsprodukt eines Polyisocyanats mit einer Valenz von 2,5 bis 6 mit einer Monohydroxyverbindung, einer difunktionellen Komponente und einer Verbindung, die einen basischen Ringstickstoff enthält.

Durch die Art der Verbindungen und der damit verbundenen Reaktionen ist es wesentlich, dass das Produkt gemäss einer Mehrstufenmethode hergestellt wird. Im Hinblick auf die Produktionseffizienz ist dies nicht erwünscht. Ausserdem kommt das Problem auf, dass sowohl das Zwischenprodukt wie das Endprodukt nicht sehr stabil sind und zur Gelierung neigen.

Mehr insbesondere kann bemerkt werden, dass es gemäss der bekannten Methode erforderlich ist, eine Mehrstufen-Arbeitsweise anzuwenden, bei der nach der Stufe 1, in der zuerst das Polyisocyanat mit den Monomerverbindungen vorreagiert werden muss, erst in der Stufe 2 mit einer difunktionellen Verbindung gearbeitet werden kann. Wird nicht nach diesem unwirtschaftlichen Verfahren gearbeitet, indem man die Komponenten der Stufen 1 und 2 von Anfang an zur Reaktion bringt, so kommt es in der Verfahrensstufe 3 zur Komplikation, derart, dass es zur starken Bildung von Gelteilchen kommt und dann auch ein Gelieren der gesamten Masse eintritt.

Das aus den Reaktionsstufen 1 und 2 resultierende Intermediat, das in der Stufe 3 mit Verbindungen der Formel III zum Lieferform-Produkt umgesetzt wird, ist nur sehr begrenzt lagerstabil (ca. 24 hrs) und somit nicht geeignet für die Bevorratung als Basis für weitere Additionsreaktionen.

Die nach dem beschriebenen Verfahren hergestellten Produkte weisen in der dritten Reaktionsstufe eine starke Neigung zur Gelierung auf, so dass diese Reaktionen nur in stark verdünnten Lösungen vorgenommen werden können, wodurch Endprodukte mit nur relativ geringem Feststoffgehalt erhalten werden. Die Erhöhung des Festkörpers durch anschliessende Vakuumdestillation ist aufgrund der ausgeprägten Koagulationsneigung des Produktes nicht möglich.

In EP-A 335.197 sind Polyisocyanat-Polyadditionsverbindungen beschrieben, die erhältlich sind durch Umsetzung von Polyisocyanate mit 3 bis 8 NCO-Gruppen mit
- A:: einer oder meherer Verbindungen, die eine -OH, -SH, -NH₂, oder -NHR Gruppe enthalten,
- B:: einem tertiären Amin, und
- C:: gegebenenfalls weiteren Komponenten.

In EP-A 270.126 sind Polyisocyanat-Polyadditionsverbindungen beschrieben, die erhältlich sind durch Umsetzung von Polyisocyanaten mit Monohydroxyverbindungen, mit 2- oder 3-funktionellen Verbindungen, und mit Verbindungen die eine freie Hydroxylgruppe im Endprodukt liefern.

EP-A 318.999 beschreibt Verbindungen wie in EP-A 154.678, wobei ein Teil der Monohydroxyverbindungen und ein Teil der Dihydroxyverbindungen durch andere Komonenten ersetzt worden sind.

Die bekannten Dispergiermittel haben weiterhin eine Verträglichkeit, eine Löslichkeit und eine Dispergierwirkung die nicht sehr gut sind.

Der vorliegenden Erfindung liegt die Aufgabe zugrunde, Dispergiermittel zu schaffen, die gegenüber den bekannten Dispergiermitteln verbesserte Eigenschaften, insbesondere verbesserte Verträglichkeit mit Bindemittel, verbesserte Löslichkeit und verbesserte Dispergierwirkung besitzen.

Weiterhin ist es eine Aufgabe der Erfinding, Dispergiermittel zu schaffen, die die obigen Nachteile bezüglich der Herstellung nicht oder in wesentlich geringerem Umfange aufweisen, und die insbesondere zu Dispersionen von Feststoffen führen, die nach dem Dispergierprozess nicht oder nur in untergeordnetem Ausmass zum Reagglomerieren neigen.

Es wurde nun überraschenderweise gefunden, dass diese Aufgabenstellung mit den nachfolgend definierten Dispergiermitteln gelöst werde kann.

Gegenstand der Erfindung sind demgemäss Dispergiermittel oder deren Salze, umfassend
- **A**: das Reaktionsprodukt eines oder mehrerer Polyisocyanate mit einer mittleren Funktionalität von 2,0 bis 5, mit
- **B**: mindestens einer Monohydroxyverbindung mit einem Molekulargewicht von mindestens 500,
- **C**: mindestens einer Dicarbonsäureverbindung mit einem Molekulargewicht von mindestens 500, und
- **D**: einer Verbindung, die wenigstens einen basischen Ringstickstoff, sowie eine isocyanat-reaktive Gruppe enthält, wobei von den Isocyanatgruppen etwa 30-70% mit B und C zusammen und etwa 30-70% mit D umgesetzt sind.

Überraschenderweise wurde jetzt gefunden, dass die Dispergiermittel nach der Erfindung eine bessere Verträglichkeit mit z.B. polaren Alkydharzen und ölfreien Polyesterharzen, eine bessere Löslichkeit und eine bessere Dispergierwirkung verschiedener schwer zu stabilisierender Pigmente besitzen.

In der Anwendung dieser Bindemittel sind diese Vorteile sehr wichtig. Dadurch sind die Bindemittel besser zu verwenden für die Dispergierung von Pigmenten in Bindemittel. Mehr insbesondere bietet die bessere Löslichkeit die Möglichkeit, die Dispergiermittel in 'high solids'-Lacken zu verwenden, da es in solchen Systemen von Vorteil ist, weniger Lösemittel zu verwenden.

Bei Anwendung von Dicarbonsäuren anstelle der bekannten beschriebenen di- und trimeren Hydroxylverbindungen können bei der Herstellung der Dispergiermittel folgende Vorteile erreicht werden:

Das im EP-A 154.678 beschriebene umständliche und unwirtschaftliche 2-Stufen-Verfahren zur Herstellung des Zwischenproduktes kann bei Einsatz von Dicarbonsäuren in einem Schritt vorgenommen werden, ohne dass eine Gelbildung bei der Reaktion in dritter Stufe eintritt.

Die mit Dicarbonsäuren hergestellten Vorprodukte haben eine erheblich verbesserte Lagerfähigkeit (mehrere Wochen), so dass aus einem Intermediat die verschiedensten Endprodukte, auch nach längerer Zwischenlagerung, hergestellt werden können.

Aufgrund der geringen Gelneigung in der dritten Reaktionsstufe besteht die Möglichkeit, Endprodukte mit erhöhtem Feststoffgehalt herzustellen, was von Vorteil ist bei der Herstellung von Lacken mit hohem Feststoffgehalt.

Gemäss der Erfindung verwendet man in den Dispergiermitteln ein Polyisocyanat mit einer Funktionalität von 2,0 bis 5, vorzugsweise etwa 4. Geeignete Polyisocyanate sind die, welche z.B. durch Addition von Diisocyanaten an Polyole erhalten werden können nach der Formel 1 des Formelblattes, Handelsprodukt: Desmodur L (TM),
oder die durch Biuretreaktion aus Diisocyanaten erhalten werden können, siehe Formel 2 des Formelblattes, Handelsprodukt: Desmodur N (TM),
oder aber die durch Cyclisierung von Diisocyanaten erhältlichen Polyisocyanate mit Isocyanurat-Grundstruktur, siehe Formel 3, Handelsprodukt: Desmodur HL (eingetragenes Warenzeichen), Formel 4: Handelsprodukt Desmodur IL (eingetragenes Warenzeichen), Formel 5, Handelsprodukt Polurene KC (eingetragenes Warenzeichen), Formel 6: Handelsprodukt Polurene HR (eingetragenes Warenzeichen), Formel 7 Toluylendiisocyanat-isophorondiisocyanat-isocyanurat oder Formel 8, trimeres Isophorondiisocyanat (Isocyanurat T1890 der Firma Chemische Werke Hüls)

Wie bereits oben dargelegt, handelt es sich bei den einschlägigen Verbindungen um Handelsprodukte, die häufig nicht in reiner Form die obigen chemischen Formeln aufweisen, sondern die Gemische von gewissen Verbindungen ähnlicher Struktur darstellen. Unter mittlerer Funktionalität wird verstanden, dass die Handelsprodukte hinsichtlich der Isocyanatgruppen die angegebene Funktionalität von 2,0 bis 5, vorzugsweise ca. 4, aufweisen.

Als Hydroxyverbindungen verwendet man jedenfalls mindestens eine Monohydroxyverbindung mit einem aliphatischen und/oder cycloaliphatischen Kohlenwasserstoff, der gegebenenfalls mit Aryl- und/oder Halogengruppen substituiert sein kann, oder aber eine oder mehrere Aether- und/oder Estergruppen enthalten kann. Vorzugsweise hat die Monohydroxyverbindung ein Molekulargewicht zwischen 750 und 3500. Bei diesen Molekulargewichten erhält man eine optimale dispergierende Wirkung. Es ist auch noch möglich, einen oder mehrere Substituenten in der Monohydroxyverbindung anzubringen, welche die Verträglichkeit mit Alkydharzen vergrössert.

Wichtig ist wohl, dass die betreffende Monohydroxyverbindung außer der Hydroxylgruppe keine Substituenten enthält, die reaktiv sind mit Isocyanaten unter den Bedingungen der Herstellung des Dispergiermittels gemäss der Erfindung.

Als Monohydroxyverbindungen können aliphatische, cycloaliphatische und/oder araliphatische Verbindungen eingesetzt werden. Es können auch Gemische solcher Verbindungen eingesetzt werden. Es können geradkettige und verzweigte aliphatische oder araliphatische Verbindungen eingesetzt werden. Sie können gesättigt oder ungesättigt sein. Gesättigte Verbindungen sind bevorzugt. Die Wasserstoffatome können teilweise durch Halogene, vorzugsweise durch Fluor und/oder auch Chlor ersetzt sein. Wenn derart substituierte Verbindungen eingesetzt werden, handelt es sich vorzugsweise um aliphatische Monoalkohole. Produkte sind im Handel erhältlich, wobei, wie dem Fachmann bekannt, die der Hydroxylgruppe nahekommenden Kohlenstoffatome in der Regel keine Halogenatome aufweisen. Beispiele für spezielle fluorierte Alkohole sind Heptadecafluorodecanol, oder C₆F₁₃CH₂CH₂OH. Die im Handel erhältlichen entsprechenden Produkte sind häufig nicht einheitlich, sondern Gemische von verschiedenen fluorierten Verbindungen, wie sie bei der technischen Synthese erhalten werden.

Als Monohydroxyverbindungen können auch solche eingesetzt werden, die mindestens eine -O- und/oder COO-Gruppe enthalten. Es handelt sich also um Polyether, Polyester oder gemischte Polyether-Polyester. Beispiele für Polyester sind solche, die durch Polymerisation eines Lactons, wie Propiolacton, Valerolacton, Caprolacton oder deren substituierte Derivate mittels einer Monohydroxy-Startkomponente erhalten werden können. Als Startkomponente werden Monoalkohole, zweckmässig mit 4 bis 30, vorzugsweise 4 bis 14 C-Atomen, wie n-Butanol, längerkettige, gesättigte und ungesättigte Alkohole, wie Propargylalkohol, Oleylalkohol, Linoloylalkohol, Oxoalkohole, Cyclohexanol, Phenylethanol, Neopentylalkohol, aber auch fluorierte Alkohole, wie sie oben erwähnt sind, eingesetzt. Es können auch Alkohole der zuvor beschriebenen Art und substituierte und unsubstituierte Phenole durch Alkoxylierung nach bekannten Verfahren mit Ethylenoxid und/oder Propylenoxid in Polyoxyalkylenmonoalkyl, Aryl-, Aralkyl- und Cycloalkylether überführt werden und diese Monohydroxypolyether in der vorbeschriebenen Art als Startkomponente für die Lactonpolymerisation eingesetzt werden. Jeweils können auch Gemische von vorgenannten Verbindungen eingesetzt werden. Diese Polyester haben zweckmässig ein Molekulargewicht im Bereich von etwa 300 bis 8000, vorzugsweise 500 bis 5000.

Es können auch Monohydroxypolyether eingesetzt werden, wie sie durch Alkoxylierung von Alkanolen, Cycloalkanolen und Phenolen erhalten werden. Diese Polyester haben zweckmässig ein Molekulargewicht im Bereich von etwa 350 bis 1500.

Geeignete Dicarbonsäureverbindungen können erhalten werden durch Umsetzung eines Diols mit einer Dicarbonsäure oder einem Anhydrid. Dabei ist es möglich, von einem höhermolekularen Diol, wie einem Polyäthylenglykol, auszugehen, und dieses mit einer einfachen Dicarbonsäure oder einem Dicarbonsäureanhydrid umzusetzen. Es ist auch möglich, eine hochmolekulare Dicarbonsäure mit einem niedermolekularen Diol umzusetzen. Schliesslich ist es auch möglich, nahezu stöchiometrische Mengen an niedermolekularem Diol und niedermolekularer Dicarbonsäure miteinander umzusetzen unter Bedingungen, dass möglichst viel Dicarbonsäure gebildet wird und jedenfalls keine oder nahezu keine Dihydroxy- oder Monohydroxy-Monocarbonsäureverbindung gebildet wird. Bevorzugt wird die Anwendung des Umsetzungsproduktes einer niedermolekularen Dicarbonsäure mit einem höhermolekularen Diol, wie einem Polyäthylenglykol.

Vorzugsweise verwendet man als Dicarbonsäureverbindung eine Kohlenwasserstoffverbindung, wobei sich zwischen den Carbonsäuregruppen mindestens acht Kohlenstoffatome befinden. Erwünschtenfalls kann diese Kohlenstoffkette noch durch Amid, Aether, Ester, S, SO₂ und/oder Urethangruppen unterbrochen sein. Im allgemeinen wird es zur Verbesserung der Verträglichkeit des Dispergiermittels mit verschiedenen Materialien bevorzugt, dass das Molekulargewicht der Dicarbonsäureverbindung zwischen 750 und 4000 liegt.

Das Verhältnis der Menge Hydroxylgruppen, die in der Monohydroxyverbindung vorhanden sind und der Menge Carbonsäuregruppen, die in der Dicarbonsäureverbindung vorhanden sind, kann innerhalb ziemlich breiter Grenzen variieren, in Anhängigkeit von der Anwendung. Vorzugsweise ist die Dicarbonsäureverbindung in einem Unterschuss in bezug auf die Monohydroxyverbindung vorhanden. Das Verhältnis der Anzahl Hydroxylgruppen, die von beiden Typen Verbindungen herrührt, variiert von 1:2 bis 5:1. Vorzugsweise liegt dieses Verhältnis zwischen 4:1 und 5:2.

Eine wichtige Komponente in dem Dispergiermittel gemäss der Erfindung ist eine Verbindung, die einen basischen Ringstickstoff enthält. Geeignete Verbindungen sind: 1-(2-Aminoethyl)piperazin, 2-(1-Pyrrolidyl)-ethylamin, 4-Amino-2-methoxy-pyrimidin, 1-(2-Hydroxyethyl)piperazin, 4-(2-Hydroxyethyl)morpholin, 2-Mercaptopyrimidin, 2-Mercaptobenzimidazol. Besonders bevorzugt sind 4-(2-Aminoethyl)pyridin, 2-Amino-6-methoxybenzothiazol, 4-Aminomethyl)pyridin, N,N-Diallylmelamin, 3-Amino-1,2,4-triazol, 1-(3-Aminopropyl)imidazol, 4-(2-Hydroxyethyl)pyridin, 1-(2-Hydroxyethyl)imidazol, 3-Mercapto-1,2,4-triazol.

Charakteristisch für diese Verbindungen ist, dass sie pro Molekül mindestens 1 Zerewitinoff-Wasserstoffatom enthalten, das bevorzugt mit den Isocyanatgruppen reagiert, und dass sie darüber hinaus eine stickstoffhaltige basische Gruppe besitzen, die nicht zur Harnstoffbildung mit Isocyanatgruppen befähigt ist. Diese basischen Gruppen werden gemäss dem stand der Technik auch durch ihren pKa-Wert gekennzeichnet (vgl. US-A 3.817.944; 4.032.698 und 4.070.388). Bevorzugt sind Verbindungen mit basischen Gruppen mit einem pKa-Wert von 2 bis 14, besonders bevorzugt von 5 bis 14, und ganz besonders bevorzugt von 5 bis 12. Der pKa-Wert kann Tabellenwerken entnommen werden. Die vorstehend angegebenen Grenzwerte beziehen sich auf die Messung des pKa-Wertes bei 25°C in einer 0.01-molaren Konzentration in Wasser. Diese basischen Gruppen verleihen den Additionsverbindungen gemäss der Erfindung ebenfalls eine Basizität, wie auch auf diesem technischen Gebiet bekannt ist (vgl. die obengenannten US-Patentschriften). Durch diese basischen Gruppen sind die Additionsverbindungen zur Salzbildung befähigt. Sie können im Sinne der Erfindung als Dispergiermittel auch in Form von derartigen Salzen eingesetzt werden.

Diese Salze werden aus dem erhaltenen Reaktionsprodukt durch Neutralisation mit organischen oder anorganischen Säuren oder durch Quaternisierung erhalten. Bevorzugt sind Salze mit organischen Monocarbonsäuren.

Bemerkt wird, dass es gegebenenfalls auch möglich ist, eine untergeordnete Menge einer Dihydroxyverbindung in das erfindungsgemässe Dispergiermittel aufzunehmen. Die Menge derselben ist jedoch immer derart, dass damit nur ein Bruchteil, d.h. weniger als 5%, vorzugsweise weniger als 2,5% der Isocyanatgruppen umgesetzt wird. Bevorzugt wird doch, daß keine Dihydroxyverbindung anwesend ist.

Die Umsetzung von Isocyanatgruppen erfolgt unter Anwendung bekannter Methoden. Im allgemeinen wird bevorzugt, die Reaktion derart auszuführen, dass in einer ersten Stufe das Polyisocyanat mit einer Mischung einer Monohydroxyverbindung und einer Dicarbonsäureverbindung umgesetzt wird. Diese Umsetzung erfolgt im allgemeinen in einem geeigneten Lösungsmittel (z.B. Kohlenwasserstoffe wie Xylene, Aether wie Dioxan, Ester wie Butylacetat, und Dimethylformamid), in Gegenwart eines Katalysators, wie Dibutylzinndilaurat, Eisenacetylacetonat oder Triäthylendiamin. Wichtig ist, dass die Umsetzung stattfindet unter solchen Bedingungen, dass wenigstens eine der Carbonsäuregruppen der Dicarbonsäure mit dem Polyisocyanat reagiert. Dies kann man erreichen durch die Verwendung eines geeigneten Katalysators.

Es ist möglich, aber nicht bevorzugt, das Polyisocyanat zuerst mit der Monohydroxyverbindung umzusetzen und das erhaltene Reaktionsprodukt weiter mit der Dicarbonsäureverbindung umzusetzen.

Nach dieser Umsetzung, bei der im allgemeinen etwa 40-80% der Isocyanatgruppen umgesetzt sein wird, wird die Reaktion mit einer Verbindung, die einen basischen Ringstickstoff enthält, durchgeführt. Dies wird zu einer Umsetzung von etwa 20-60% der Isocyanatgruppen führen. Isocyanatgruppen, die gegebenenfalls nicht reagiert haben, werden schliesslich deaktiviert durch Reaktion mit niederem Alkohol oder einer vergleichbaren Verbindung. Dazu ist namentlich Butanol geeignet.

Die Erfindung wird jetzt an Hand einiger Beispiele erläutert, aber sie ist nicht auf diese beschränkt.

### Herstellungsbeispiel A

Unter Inertgas werden 31,92 g Caprolacton, 10,40 g HD-Ocenol 45/50 (Fa. Henkel & Cie., Düsseldorf) dispergiert. Man setzt 0,0012 g Dibutylzinndilaurat hinzu und erwärmt unter Rühren auf 170°C, bis ein Festkörper von 99% erreicht ist (ca. 8 hrs.). Das Produkt ist bei Raumtemperatur fest und von schwachgelblicher Farbe.

### Herstellungsbeispiel B

125,00 g Polyethylenglykol mit der mittleren Molekularmasse von 1000 werden unter Inertgas geschmolzen. Unter Rühren fügt man 24,50 g Maleinsäureanhydrid und 16,61 g Methoxypropylacetat hinzu und erwärmt auf 150°C. Bei Erreichen einer Säurezahl von 93 mg KOH/g ist die Additionsreaktion vollendet; Reaktionszeit ca. 8 hrs. Das harzartige Produkt ist von gelbbräunlicher Farbe und hat einen Festkörpergehalt von 90%.

### Beispiel 1

Unter Inertgas und Rühren werden 24,21 g eines Caprolactonpolyesters (Beispiel A) und 63,00 g Desmodur IL®, (50%ig in Butylacetat) in 31,29 g n-Butylacetat und 28,81 g Methoxypropylacetat gelöst. Dann werden 10,63 g Dicarbonsäure (Herstellungsbeispiel B), sowie 0,02 Zinnoctoat hinzugefügt und der Ansatz auf 70°C erwärmt. Nach einer Reaktionszeit von 2 Stunden sind 50% der NCO-Gruppen umgesetzt. Man kühlt auf 50°C und fügt 3,36 g 3-Amino-1,2,4-triazol dispergiert in 19,05 g N-Methylpyrrolidon hinzu und rührt noch 1 h weiter. Dann werden 6,75 g n-Butanol zugesetzt und die Temperatur auf 50°C für 2 hrs gehalten. Das flüssige Endprodukt ist von hellgelber Farbe und hat einen Feststoffgehalt von 35%.

### Beispiel 2

Unter Inertgas und Rühren werden 36,32 g eines Caprolactonpolyesters (Beispiel A) und 63,00 g Desmodur IL®, (50%ig in Butylacetat) in 46,94 g n-Butylacetat und 43,22 g Methoxypropylacetat gelöst. Dann werden 15,95 g Dicarbonsäure (Herstellungsbeispiel B), sowie 0,03 Zinnoctoat hinzugefügt und der Ansatz auf 70°C erwärmt. Nach einer Reaktionszeit von 2 Stunden sind 50% der NCO-Gruppen umgesetzt. Man kühlt auf 50°C und gibt 6,49 g 2-Amino-4-methylpyridin, die vorher in 25,95 g N-Methylpyrrolidon gelöst werden, hinzu. Man hält eine weitere h bei 50°C und laßt dann 15,44 g n-Butanol hinzulaufen. Zur Vervollständigung der Reaktion läßt man noch 2 hrs bei 50°C reagieren. Das Endprodukt ist von hellbrauner Farbe und hat einen Feststoffgehalt von 35%.

### Beispiel 3

Unter Inertgas und Rühren werden 48,43 g eines Caprolactonpolyesters (Beispiel A) und 84,00 g Desmodur IL®, (50%ig in Butylacetat) in 77,62 g n-Butylacetat und 44,94 g Methoxypropylacetat gelöst. Dann werden 21,26 g Dicarbonsäure (Herstellungsbeispiel B) und 0,04 Zinnoctoat hinzugefügt und der Ansatz auf 70°C erwärmt. Nach einer Reaktionszeit von 2 Stunden sind 50% der NCO-Gruppen umgesetzt. Man kühlt auf 50°C und läßt 10,02 g 1-(3-Aminopropyl)imidazol gelöst in 34,18 g N-Methylpyrrolidon zulaufen. Nach 1 h werden 17,09 g n-Butanol zugesetzt und die Temperatur von 50°C noch 2 hrs gehalten. Das Endprodukt ist von hellgelber Farbe und hat einen Feststoffgehalt von 35%.

### Beispiel 4

Unter Inertgas und Rühren werden 60,54 g eines Caprolactonpolyesters (Beispiel A) und 105,00 g Desmodur IL®, (50%ig in Butylacetat) in 78,23 g n-Butylacetat und 472,04 g Methoxypropylacetat gelöst. Dann werden 26,57 g Dicarbonsäure (Herstellungsbeispiel B) und 0,05 Zinnoctoat hinzugefügt und der Ansatz auf 70°C erwärmt. Nach einer Reaktionszeit von 2 Stunden sind 50% der NCO-Gruppen umgesetzt. Man kühlt auf ca 50°C und gibt eine Lösung bestehend aus 18,02 g 2-Amino-6-methoxybenzothiazol und 72,06 g N-Methylpyrrolidon hinzu. Nach 1 h werden 10,30 g n-Butanol zugegeben und noch weitere 2 hrs bei 50°C gehalten. Das flüssige Endprodukt ist von hellbrauner Farbe und hat einen Feststoffgehalt von 35%.

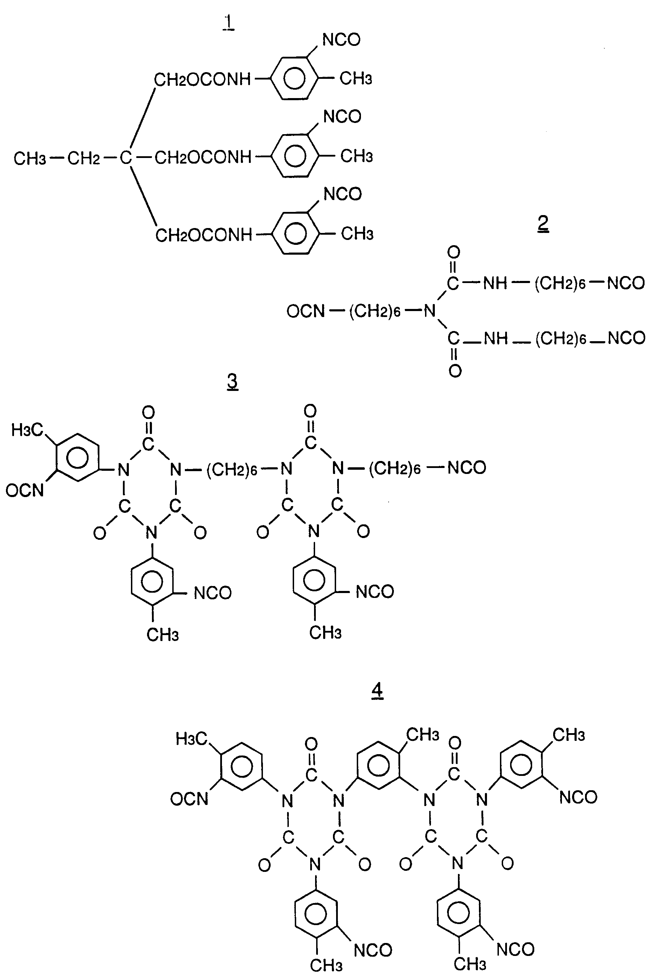

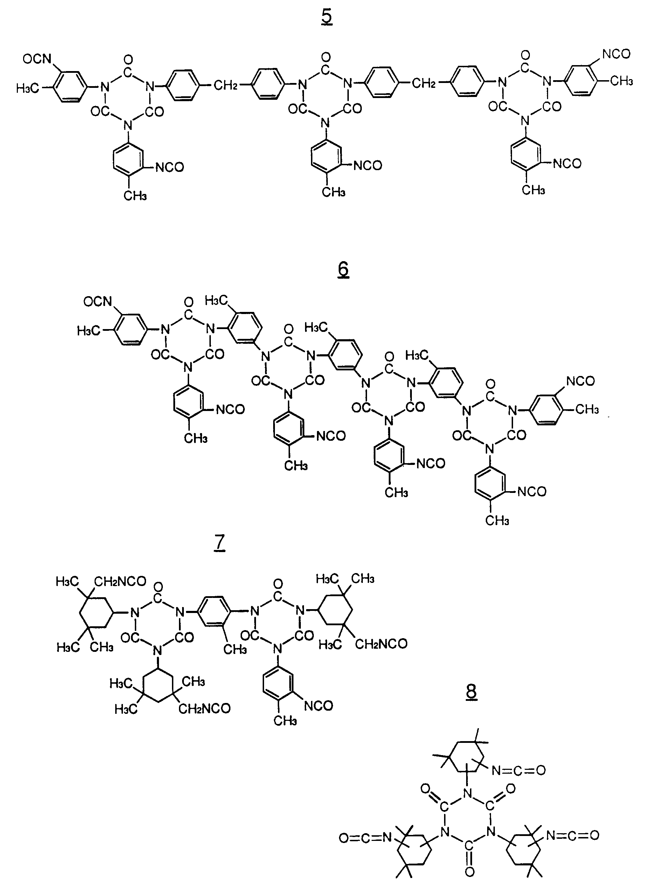

## Patentansprüche

1. Dispergiermittel oder deren Salze, umfassend
**A** das Reaktionsprodukt eines oder mehrerer Polyisocyanate mit einer mittleren Funktionalität von 2,0 bis 5, mit
**B** mindestens einer Monohydroxyverbindung mit einem Molekulargewicht von mindestens 500,
**C** mindestens einer Dicarbonsäureverbindung mit einem Molekulargewicht von mindestens 500, und
**D** einer Verbindung, die wenigstens einen basischen Ringstickstoff, sowie eine isocyanat-reaktive Gruppe enthält, wobei von den Isocyanatgruppen etwa 30-70% mit B und C zusammen und etwa 30-70% mit D umgesetzt sind.

2. Dispergiermittel nach Anspruch 1, dadurch gekennzeichnet, dass in B mindestens eine Monohydroxyverbindung mit einem aliphatischen und/oder cycloaliphatischen Kohlenwasserstoff, der gegebenenfalls mit Aryl- und/oder Halogengruppen substituiert sein kann, oder aber eine oder mehrere Aether- und/oder Estergruppen enthalten kann, verwendet wird.

3. Dispergiermittel nach Anspruch 1 oder 2, dadurch gekennzeichnet, dass die Monohydroxyverbindung ein Molekulargewicht zwischen 750 und 3500 hat.

4. Dispergiermittel nach Anspruch 1-3, dadurch gekennzeichnet, dass eine Dicarbonsäureverbindung verwendet wird auf der Basis einer Kohlenwasserstoffverbindung, wobei sich zwischen den Carbonsäuregruppen mindestens acht Kohlenstoffatome befinden, wobei die Kohlenstoffkette noch durch Amid, Aether, Ester, S, SO₂ und/oder Urethangruppen unterbrochen sein kann.

5. Dispergiermittel nach einem der Ansprüche 1-4, dadurch gekennzeichnet, dass das Molekulargewicht der Dicarbonsäureverbindung zwischen 750 und 4000 liegt.

6. Dispergiermittel nach einem der Ansprüche 1-5, dadurch gekennzeichnet, dass die Dicarbonsäureverbindung erhalten ist durch Umsetzung eines Diols mit einer Dicarbonsäure oder einem Anhydrid.

7. Dispergiermittel nach einem der Ansprüche 1-6, dadurch gekennzeichnet, dass die Dicarbonsäureverbindung in einem Unterschuss in bezug auf die Monohydroxyverbindung vorhanden ist.

8. Dispergiermittel nach einem der Ansprüche 1-7, dadurch gekennzeichnet, dass das Verhältnis der Anzahl Hydroxylgruppen von Monohydroxyverbindung zu der Anzahl Carbonsäuregruppen von Dicarbonsäureverbindung variiert von 1:2 bis 5:1, vorzugsweise zwischen 4:1 und 5:2.

9. Dispergiermittel nach einem der Ansprüche 1-8 , dadurch gekennzeichnet, dass die Verbindung nach **D** pro Molekül mindestens 1 Zerewitinoff-Wasserstoffatom enthalt, das bevorzugt mit den Isocyanatgruppen reagiert, und dass sie darüber hinaus eine stickstoffhaltige basische Gruppe besitzt, die nicht zur Harnstoffbildung mit Isocyanatgruppen befähigt ist.

10. Dispergiermittel nach Anspruch 9, dadurch gekennzeichnet, dass man eine Verbindung verwendet aus der Gruppe von 1-(2-Aminoethyl)piperazin, 2-(1-Pyrrolidyl)-ethylamin, 4-Amino-2-methoxy-pyrimidin, 1-(2-Hydroxyethyl)piperazin, 4-(2-Hydroxyethyl)morpholin, 2-Mercaptopyrimidin, 2-Mercaptobenzimidazol, 4-(2-Aminoethyl)pyridin, 2-Amino-6-methoxybenzothiazol, 4-Aminomethyl)pyridin, N,N-Diallylmelamin, 3-Amino-1,2,4-triazol, 1-(3-Aminopropyl)imidazol, 4-(2-Hydroxyethyl)pyridin, 1-(2-Hydroxyethyl)imidazol und 3-Mercapto-1,2,4-triazol.

11. Verfahren zur Herstellung eines Dispergiermittels nach Anspruch 1-10, umfassend die Umsetzung
**A** eines oder mehrerer Polyisocyanate mit einer mittleren Funktionalität von 2,0 bis 5, mit
**B** mindestens einer Monohydroxyverbindung mit einem Molekulargewicht von mindestens 500,
**C** mindestens einer Dicarbonsäureverbindung mit einem Molekulargewicht von mindestens 500, und
**D** einer Verbindung, die wenigstens einen basischen Ringstickstoff, sowie eine isocyanat-reaktive Gruppe enthält, wobei die Umsetzung von **A** mit **C** stattfindet in Anwesenheit eines Katalysators, der die Umsetzung von Carbonsäure mit NCO-Gruppen katalysiert, und wobei von den Isocyanatgruppen etwa 30-70% mit B und C zusammen und etwa 30-70% mit D umgesetzt sind.

12. Verwendung des Dispergiermittels nach Anspruch 1-10, zur Dispergierung von Feststoffen.

13. In flüssige Systeme einzuarbeitende pulver- oder faserförmige Feststoffe, die mit Dispergiermitteln nach Anspruch 1-10 beschichtet sind.

14. Lacke, die Feststoffe nach Anspruch 13 enthalten.

## Claims

1. Dispersing agents or salts thereof, comprising
**A** the reaction product of one or more polyisocyanates having an average functionality of 2.0 to 5, with
**B** at least one monohydroxy compound with a molecular weight of at least 500,
**C** at least one dicarboxylic acid compound with a molecular weight of at least 500, and
**D** a compound which contains at least one basic ring nitrogen and one group which is reactive towards isocyanate, wherein about 30-70 % of the isocyanate groups are reacted with B and C together and about 30-70 % of the isocyanate groups are reacted with D.

2. A dispersing agent according to claim 1, characterised in that at least one monohydroxy compound is used in B, including an aliphatic and/or cycloaliphatic hydrocarbon which may optionally be substituted with aryl and/or halogen groups or which may, however, contain one or more ether and/or ester groups.

3. A dispersing agent according to claim 1 or 2, characterised in that the monohydroxy compound has a molecular weight between 750 and 3500.

4. A dispersing agent according to claims 1-3, characterised in that a dicarboxylic acid compound is used which is based on a hydrocarbon compound, wherein there are at least eight carbon atoms between the carboxylic acid groups, wherein the carbon chain may also be interrupted by amide, ether, ester, S, SO₂ and/or urethane groups.

5. A dispersing agent according to any one of claims 1-4, characterised in that the molecular weight of the dicarboxylic acid compound is between 750 and 4000.

6. A dispersing agent according to any one of claims 1-5, characterised in that the dicarboxylic acid compound is obtained by the reaction of a diol with a dicarboxylic acid or an anhydride.

7. A dispersing agent according to any one of claims 1-6, characterised in that the dicarboxylic acid compound is present in a deficit with respect to the monohydroxy compound.

8. A dispersing agent according to any one of claims 1-7, characterised in that the ratio of the number of hydroxyl groups of monohydroxy compound to the number of carboxylic acid groups of dicarboxylic acid compound varies from 1:2 to 5:1, and is preferably between 4:1 and 5:2.

9. A dispersing agent according to any one of claims 1-8, characterised in that the compound according to **D** contains at least 1 Zerewitinoff hydrogen atom which reacts preferentially with the isocyanate groups, and that in addition it contains a basic nitrogen-containing group which is not capable of forming urea with isocyanate groups.

10. A dispersing agent according to claim 9, characterised in that a compound is used from the group comprising 1-(2-aminoethyl)piperazine, 2-(1-pyrrolidyl)-ethylamine, 4-amino-2-methoxy-pyrimidine, 1-(2-hydroxyethyl)piperazine, 4-(2-hydroxyethyl)morpholine, 2-mercaptopyrimidine, 2-mercaptobenzimidazole, 4-(2-aminoethyl)pyridine, 2-amino-6-methoxybenzothiazole, 4-aminomethylpyridine, N,N-diallylmelamine, 3-amino-1,2,4-triazole, 1-(3-aminopropyl)imidazole, 4-(2-hydroxyethyl)pyridine, 1-(2-hydroxyethyl)imidazole and 3-mercapto-1,2,4-triazole.

11. A method of producing a dispersing agent according to claims 1-10, comprising the reaction of
**A** one or more polyisocyanates having an average functionality of 2.0 to 5, with
**B** at least one monohydroxy compound with a molecular weight of at least 500,
**C** at least one dicarboxylic acid compound with a molecular weight of at least 500, and
**D** a compound which contains at least one basic ring nitrogen and one group which is reactive towards isocyanate, wherein the reaction of **A** with **C** takes place in the presence of a catalyst which catalyses the reaction of carboxylic acid with NCO groups, and wherein about 30-70 % of the isocyanate groups are reacted with B and C together and about 30-70 % of the isocyanate groups are reacted with D.

12. Use of the dispersing agent according to claims 1-10 for the dispersion of solids.

13. Pulverulent or fibrous solids which are to be incorporated in liquid systems and which are coated with dispersing agents according to claims 1-10.

14. Lacquers which contain solids according to claim 13.

## Revendications

1. Agents dispersants ou leurs sels, comprenant
A le produit de réaction d'un ou de plusieurs polyisocyanates avec une fonctionnalité moyenne de 2,0 à 5, avec
B au moins un composé monohydroxylique ayant un poids moléculaire d'au moins 500,
C au moins un composé d'acide dicarboxylique ayant un poids moléculaire d'au moins 500, et
D un composé qui contient au moins un azote basique de cycle ainsi qu'un groupe réactif avec les isocyanates, environ 30% à 70% des groupes isocyanato ayant réagit avec B et C, ensemble, et environ 30% à 70% avec D.

2. Agents dispersants selon la revendication 1, caractérisés en ce que dans B on utilise au moins un composé monohydroxylé avec un hydrocarbure aliphatique et/ou cycloaliphatique qui peut être éventuellement substitué par des groupes aryles et/ou halogéno, ou qui peut contenir un ou plusieurs groupes éther et/ou ester.

3. Agents dispersants selon la revendication 1 ou 2, caractérisés en ce que le composé monohydroxylé a un poids moléculaire compris entre 750 et 3500.

4. Agents dispersants selon la revendication 1 ou 2, caractérisés en ce qu'on utilise un composé d'acide carboxylique à base d'un composé hydrocarboné, où entre les groupes d'acide carboxylique se trouvent au moins 8 atomes de carbone, la chaîne hydrocarbonée pouvant être interrompue par des groupes amido, éthers, esters, S, SO₂ et/ou uréthanne.

5. Agents dispersants selon l'une des revendications 1 ou 4, caractérisés en ce que le poids moléculaire du composé d'acide dicarboxylique est compris entre 750 et 4000.

6. Agents dispersants selon une ou plusieurs des revendications 1 ou 5, caractérisés en ce que le composé d'acide dicarboxylique est obtenu par réaction d'un diol avec un acide dicarboxylique ou un anhydride.

7. Agents dispersants selon l'une des revendications 1 à 6, caractérisés en ce que le composé d'acide dicarboxylique est présent à défaut par rapport aux composés monohydroxylés.

8. Agents dispersants selon l'une des revendications 1 à 7, caractérisés en ce que le rapport entre le nombre des groupes hydroxyles du composé monohydroxylique et le nombre des groupes d'acide carboxylique du composé d'acide dicarboxylique varie de 1:2 à 5:1, de préférence entre 4:1 et 5:2.

9. Agents dispersants selon l'une des revendications 1 à 8, caractérisés en ce que le composé selon D contient par molécule au moins un atome d'hydrogène de Zerewitinoff, qui réagit de préférence avec les groupes isocyanato et qui contient en outre un groupe basique azoté qui n'est pas apte à la formation d'urée avec le groupe isocyanato.

10. Agents dispersants selon la revendications 9, caractérisés en ce qu'on utilise un composé pris dans le groupe comportant la 1-(2-amino-éthyl)-pipérazine, la 2-(1-pyrrolidyl)-éthylamine, la 4-amino-2-méthoxy-pyrimidine, la 1-(2-hydroxyéthyl)-pipérazine, la 4-(2-hydroyyéthyl)-morpholine, la 2-mercaptopyrimidine, la 2-mercaptobenzimidazol. la 4-(2-aminoéthyl)-pyridine, le 2-amino-6-méthoxybenzothiazole, la 1-aminoéthyl-pyridine, le 2-amino-6-méthoxybenzothiazole, la 4-aminoéthyl-pyridine, la N,N-diallyl-mélamine, le 3-amino-1,2,4-triazole, le 1-(3-aminopropyl)-imidazoel, la 4-(2-hydroxyéthyl)-pyridine, le 1-(2-hydroxyéthyl)-imidazole et le 3-mercapto-1,2,4-triazole.

11. Procédé pour la préparation d'un agent dispersant selon la revendication 1 à 10, comprenant la réaction
A un ou plusieurs polyisocyanates ayant une fonctionnalité moyenne de 2,0 à 5, avec
B au moins un composé monohydroxylé ayant un poids moléculaire d'au moins 500,
C au moins un composé d'acide dicarboxylique ayant un poids moléculaire d'au moins 500, et
D un composé qui contient au moins un atome d'azote de cycle basique ainsi qu'un groupe réactif avec des isocyanates, la réaction de A avec C ayant lieu en présence d'un catalyseur, qui catalyse la réaction de l'acide carboxylique avec des groupes NCO, et environ 30% à 70% des groupes isocyanato ayant réagit avec B et C ensemble et environ 30% à 70% avec D.

12. Utilisation de l'agent dispersant selon la revendication 1 à 10, pour disperser des matières solides.

13. Matières solides pulvérulentes ou fibreuses à incorporer dans des systèmes liquides, lesdites matière étant revêtues des agents dispersants selon la revendication 1 à 10.

14. Vernis qui contiennent des matières solides selon la revendication 13.
